# EUROPÄISCHE PATENTANMELDUNG

(11) **EP 2 478 886 A1**
(43) Veröffentlichungstag der Anmeldung: **25.07.2012**
(21) Anmeldenummer: 11000419.9
(22) Anmeldetag: 20.01.2011
(51) Int. Cl.: A61J 1/03, B32B 15/16, B32B 15/20, B32B 27/20, B65D 75/36, B65D 83/04, B65D 75/32

(54) **Verpackungsmaterial für feuchteempfindliche Produkte**

(71) Anmelder: Amcor Flexibles Kreuzlingen Ltd., 8212 Neuhausen am Rheinfall (CH)
(72) Erfinder: Hombach, Franz, Peter, 8222 Beringen (CH); Brandl, Oliver, 78467 Konstanz (DE); Nägeli, Hans, Rudolf, 8212 Neuhausen (CH)
(74) Vertreter: Gernet, Samuel Andreas

(57) **Zusammenfassung**

Ein Verpackungsmaterial (10) zur Herstellung von Verpackungen für feuchteempfindliche Produkte weist eine Aluminiumfolie (12) als Wasserdampfbarriere auf, die auf einer ersten Seite eine feuchteregulierende Absorberschicht (16) aufweist und auf der zweiten Seite unbeschichtet, beschichtet, lackiert oder kaschiert ist. Die feuchteregulierende Absorberschicht (16) enthält 0,15 bis 95 Gew.-% eines hygroskopischen Salzes und/oder 0,15 bis 95 Gew.-% Silicagel und/oder 0,15 bis 95 Gew.-% Zeolithe. Mit dem Verpackungsmaterial ist in einem Kopfraum einer Verpackung über den Produkten bei einer Temperatur von -20°C bis 50 °C eine relative Feuchte (RH) von 5 bis 80 % einstellbar.

## Beschreibung

Die Erfindung betrifft ein Verpackungsmaterial zur Herstellung von Verpackungen für feuchteempfindliche Produkte, insbesondere für feuchteempfindliche Pharmaprodukte, die nicht zu feucht oder zu trocken gelagert werden dürfen.

Es ist allgemein bekannt, gegen Feuchtigkeit empfindliche Produkte durch Verpacken in Kunststoffmaterialien vor schädlichen atmosphärischen Einflüssen zu schützen. Feuchteempfindliche Produkte können beispielsweise mit einem für Wassermoleküle praktisch undurchlässigen Kunststofffilm umhüllt werden. Als Barriere gegen den Durchtritt von Feuchtigkeit kann z.B. ein Film aus einem Polyethylen hoher Dichte (HDPE) oder aus einem Polyvinylidenchlorid-Methylacrylat-Copolymer (PVDC-MA) verwendet werden. Filme aus orientiertem Polypropylen (oPP), gegebenenfalls metallisiert, oder metallisierte Polyesterfilme, dienen ebenfalls als Barrierematerial gegen Feuchtigkeitsdurchtritt. Weiter sind Metallfolien als Barrierematerial gegen den Durchtritt von Feuchtigkeit bekannt und werden oft im Verbund mit Kunststofffilmen eingesetzt. Eine gute Barrierewirkung gegen Wasserdampf und Gase kann auch mit einer Schicht aus Ethylen-Vinylalkohol-Copolymer (EVOH) erreicht werden.

Obschon heute Laminate mit Barriereschichten mit hoher Durchtrittssperrwirkung gegen Feuchtigkeit bekannt sind, kann der Durchtritt von Feuchtigkeit gerade bei gesiegelten Verpackungen nicht vollständig verhindert werden, da die Kanten der Laminate durch die Barriereschicht nicht geschützt sind. Über diese ungeschützten Kanten im Bereich von Siegelungen kann Feuchtigkeit in das Innere gesiegelter Verpackungen eindringen und die Qualität feuchteempfindlicher Produkte beeinträchtigen.

Aus WO-A-2004/000541 und WO-A-2004/080808 sind mehrschichtige Filme mit einer Barriereschicht und mit einer Feuchte absorbierendes Material enthaltenden Siegelschicht bekannt. Die Filme dienen zur Verpackung feuchteempfindlicher Gegenstände, wie z.B. Diagnostik-Teststreifen, und werden entweder nach Faltung gegen sich selbst oder gegen einen zweiten Film heissgesiegelt. Als Feuchte absorbierendes Material mit starker Wasserbindung wird bevorzugt Kalziumoxid (CaO) eingesetzt.

Aus WO-A-2007/104344 ist ein Laminat zur Herstellung von Blisterbodenteilen für Blisterpackungen zur Verpackung von gegen Feuchte empfindlichen Produkten bekannt. Das Laminat weist eine Sperrschicht als Barriere gegen Wasserdampf und Gase, eine auf einer ersten Seite der Sperrschicht angeordnete Aussenschicht aus Polyamid, ein auf der zweiten Seite der Sperrschicht angeordnetes, Feuchte absorbierendes Absorbermaterial und eine auf der zweiten Seite der Sperrschicht angeordnete, das Absorbermaterial zumindest teilweise abdeckende siegelfähige Innenschicht aus einem Polyolefin auf. Damit dieses Material einen vorgegebenen Feuchtegrad aufweist, wird das Absorbermaterial in EP-A- 2 135 738 vorkonditioniert.

Bekannte Absorbermaterialien wie Silicagel, Zeolithe und Calciumoxid werden ab Werk mit einem Feuchtegrad < 1% RH (relative Feuchtigkeit) ausgeliefert, sind in diesem trockenen Zustand extrudierbar und besitzen eine hohe Feuchtekapazität. Damit die Absorbermaterialien bei einem definiert einzustellenden Feuchtelevel (z.B. 20% RH) eine puffernde Funktion besitzen, müssen sie auf diesen Wert befeuchtet werden. Dies kann nicht vor der Extrusion eines Absorbermaterial enthaltenden Materials erfolgen, da ein derart hoher Feuchtegehalt zu Wasserdampf bei der Extrusion führt und die Kunststoffschmelze wegen qualitätsmindernden Wasserdampferuptionen nicht verarbeitbar ist.

Mit den vorstehend erwähnten Feuchteabsorbern lässt sich die Umgebungsfeuchte auf bis zu 0 % relative Feuchte reduzieren. Da gewisse feuchteempfindliche Produkte auch nicht zu trocken gelagert werden dürfen, sind Feuchteabsorber nicht in allen Fällen einsetzbar.

Es sind auch sogenannte Feuchteregulatoren bekannt, die durch Aufnahme oder Abgabe von Feuchtigkeit eine bestimmte relative Feuchte in einem abgeschlossenen System einstellen und konstant halten können. Auf diese Weise kann die relative Feuchte in einem Bereich zwischen 1 und 100 % eingestellt werden.

Hygroskopische Salze absorbieren Wasserdampf, je nach Substanz, bei geringen, mittleren und hohen relativen Luftfeuchten. So absorbiert Lithiumbromid ab einer relativen Luftfeuchte von 6 %, Magnesiumnitrat ab 53 % relativer Luftfeuchte und Kaliumsulfat ab 97 % relativer Luftfeuchte. Die hygroskopischen Salze lösen sich durch die Absorption von Wasserdampf in dem absorbierten Wasser auf. Sinkt die Umgebungsfeuchte, geben die Lösungen Wasserdampf ab und es fallen ihre Kristalle aus.

Aus dem Stand der Technik sind Beutel oder Sachets bekannt, die mit Feuchteabsorbern bzw. Feuchteregulatoren gefüllt sind. Diese werden zur Reduzierung der Umgebungsfeuchte eingesetzt.

Aus DE-A-198 26 209 und EP-A-0 693 313 sind Feuchteabsorber und -regulatoren bekannt, die in Polymer- oder Oligomer-Matrizes eingearbeitet sind. Bei diesen Systemen handelt es sich um Compounds bzw. Dispersionen aus Polymeren, Lacken oder Heissschmelzklebstoffen mit pulvrigen Feuchteabsorbern bzw. Feuchteregulatoren, die zu Formkörpern extrudiert oder als Beschichtung aufgetragen werden können.

Die vorbeschriebenen Systeme werden jedoch lediglich zur Absorption von Wasserdampf eingesetzt und sind zur Regulierung der Umgebungsfeuchte weder vorgesehen noch darauf optimiert.

Aus der DE-A-40 00 143 ist eine feuchteregulierende Verpackung bekannt, die auf einem Vlies basiert, das die Umgebungsfeuchte regulieren kann. Das Vlies ist dabei mit einer hygroskopischen Lösung imprägniert.

Vliese mit Feuchteregulatoren gewähren jedoch, insbesondere bei Beschädigung, keinen Schutz vor dem Austritt des flüssigen Feuchteregulators. Beutel und Vliese sind deshalb nicht als Packmittel, sondern nur als Packhilfsmittel geeignet und werden den Verpackungen beigefügt.

Aus der WO 2007/121909 A ist ein feuchteregulierendes Verpackungsmaterial aus einer beispielsweise durch Schäumen mit Kavitäten versehenen Polymermatrix, in der eine die in der Umgebung vorhandene Feuchtigkeit regulierende Substanz eingebettet ist, bekannt.

Bei direktem oder indirektem Kontakt zu Lebensmitteln oder Pharmawirkstoffen sollte darauf geachtet werden, dass die eingesetzten Absorbermaterialien weder giftig noch gesundheitsschädlich und wenn möglich als Lebensmittelzusatzstoff zugelassen sind.

Der Erfindung liegt die Aufgabe zugrunde, ein Verpackungsmaterial für feuchteempfindliche Produkte, insbesondere für feuchteempfindliche Pharmaprodukte, die nicht zu feucht oder zu trocken gelagert werden dürfen, bereitzustellen.

Zur erfindungsgemässen Lösung der Aufgabe führt ein Verpackungsmaterial zur Herstellung von Verpackungen für feuchteempfindliche Produkte, mit welchem Verpackungsmaterial in einem Kopfraum einer Verpackung über den Produkten bei einer Temperatur von -20°C bis 50 °C, insbesondere 5 bis 50 °C, eine relative Feuchte (RH) von 5 bis 80 %, insbesondere 5 bis 35 %, einstellbar ist, wobei das Verpackungsmaterial als Wasserdampfbarriere eine Aluminiumfolie aufweist, die auf einer ersten Seite eine feuchteregulierende Absorberschicht aufweist und auf der zweiten Seite unbeschichtet, beschichtet, lackiert oder kaschiert ist, wobei die feuchteregulierende Absorberschicht 0,15 bis 95 Gew.-%, insbesondere 0,15 bis 25 Gew.-%, eines hygroskopischen Salzes und/oder 0,15 bis 95 Gew.-%, insbesondere 0,15 bis 25 Gew.-%, Silicagel und/oder 0,15 bis 95 Gew.-%, insbesondere 0,15 bis 25 Gew.-%, Zeolithe enthält.

Eine bevorzugte Absorberschicht, mit der in einem Kopfraum einer Verpackung über den Produkten bei einer Temperatur von -20°C bis 50 °C, insbesondere 5 bis 50 °C, eine relative Feuchte (RH) von 5 bis 80 %, insbesondere 5 bis 35 %, einstellbar ist, enthält nur einen Zusatz eines hygroskopischen Salzes. Ein weiterer Zusatz von Silicagel oder Zeolithen kann in den Blend eingemischt werden, um eventuell zusätzliche Feuchte zu puffern oder zu sammeln.

Bevorzugt ist zwischen der Aluminiumfolie und der feuchteregulierenden Absorberschicht eine Haftvermittlerschicht angeordnet.

Bevorzugt ist auf der Absorberschicht eine Siegelschicht angeordnet. Die Siegelschicht verhindert auch einen direkten Kontakt zwischen Produkt und Absorbermaterial.

Ein insbesondere bei Verpackungen für Pharmaprodukte besonders geeignete Absorberschicht enthält als hygroskopisches Salz den Lebensmittelzusatzstoff Kaliumacetat, vorzugsweise in einer Konzentration von 1 bis 10 Gew.-%, insbesondere 1 bis 5 Gew.-%. Kaliumacetat ist das Mittel der Wahl zum Erreichen einer relativen Feuchte im Kopfraum von 20 bis 25 % RH. Für den Bereich von 5 bis 80 % RH wird mehr als ein hygroskopisches Salz benötigt.

Die Absorberschicht besteht bevorzugt aus einem Blend aus Polyethylen (PE), insbesondere aus einem Polyethylen niedriger Dichte (LDPE) oder hoher Dichte (HDPE), Polypropylen (PP), Ethylen-Acrylsäure-Copolymer (EAA), Ethylen-Methacrylat-Copolymer (EMA), Polyethylenterephthalat (PET) oder Polyvinylchlorid (PVC) mit dem Zusatz aus hygroskopischem Salz und/oder Silicagel und/oder Zeolithen.

Die Haftvermittlerschicht besteht bevorzugt aus einem Ethylen-Acrylsäure-Copolymer (EAA), einem Ethylen-Methacrylat-Copolymer (EMA), einem mit Maleinsäureanhydrid gepfropften Polypropylen (MAH-PP), einem Polyurethan (PU)-Kleber oder einer mit lösemittelhaltigen oder lösemittelfreien Klebstoffen hergestellten Klebstoffschicht.

Die Siegelschicht besteht bevorzugt aus Polyethylen (PE), insbesondere aus einer Mischung (Blend) aus einem Polyethylen niedriger Dichte (LDPE) und aus einem Polyethylen hoher Dichte (HDPE) oder anderen Polyolefinen oder modifizierten Polyolefinen.

Die Haftvermittlerschicht, die Absorberschicht mit dem Zusatz aus hygroskopischem Salz und die Siegelschicht werden bevorzugt als Coextrusionsschicht auf die Aluminiumfolie aufgetragen. Anstelle einer Coextrusionsschicht kann jedoch auch eine lackierte Schicht oder ein kaschierter Film eingesetzt werden.

Die Aussenseite der Aluminiumfolie ist bevorzugt über eine Klebstoffschicht mit einem Kunststofffilm, insbesondere aus orientiertem Polyamid (oPA), verbunden. Die Aussenseite der Aluminiumfolie kann aber mit beliebigen Schichten beschichtet oder auch unbeschichtet sein.

Ein hauptsächliches Verwendungsgebiet des erfindungsgemässen Verpackungsmaterials liegt in der Herstellung von Blisterverpackungen für Pharmaprodukte. Aus dem Verpackungsmaterial mit der erfindungsgemässen Absorberschicht wird zunächst durch Kaltverformung ein Blisterbodenteil gefertigt. Nach dem Befüllen des Blisterbodenteils mit feuchteempfindlichen Tabletten, Pulvern oder dgl. Pharmaprodukten wird anschliessend eine Deckfolie, die eine Sperrschicht als Barriere gegen Wasserdampf und Gase umfasst, gegen die Siegelschicht des Verpackungsmaterials auf das Blisterbodenteil gesiegelt.

Das erfindungsgemässe Verpackungsmaterial kann aber auch für andere Verpackungen, wie Beutelverpackungen und andere Beutelfolienanwendungen oder als Deckfolien für Blisterpackungen eingesetzt werden.

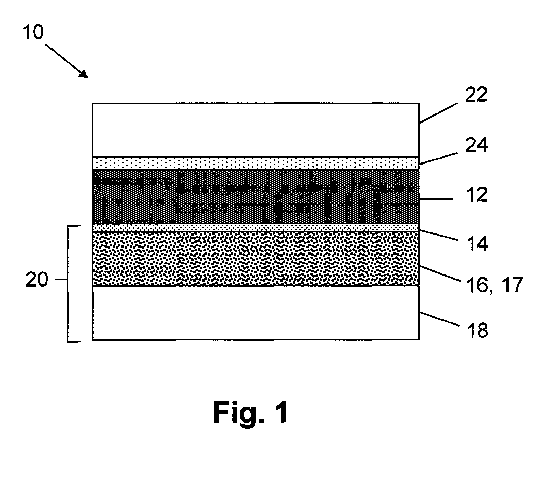

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt schematisch in
- Fig. 1: den Aufbau eines zur Herstellung von Blisterbodenteilen geeigneten Verpackungsmaterials.

Ein Verpackungsmaterial 10 weist gemäss Fig. 1 beispielhaft den folgenden Schichtaufbau auf:
- 22: Film aus orientiertem Polyamid (oPA), 25 µm dick
- 24: Klebstoffschicht
- 12: Aluminiumfolie, 45 µm dick
- 14: Haftvermittlerschicht aus Ethylen-Acrylsäure-Copolymer (EAA),
- 16: Absorberschicht aus Polyethylen niedriger Dichte (LDPE), 45 µm dick, mit
- 17: 5 Gew.% Partikeln aus Kaliumacetat als feuchteregulierende Substanz
- 18: Siegelschicht aus einer Mischung (Blend) aus Polyethylen niedriger Dichte (LDPE) und Polyethylen hoher Dichte (HDPE), 10 µm dick

Der oPA-Film 22 bildet die spätere Aussenseite, die Siegelschicht aus LDPE und HDPE die Innenseite eines aus dem Verpackungsmaterial 10 hergestellten Blisterbodenteils.

Zur Herstellung eines Verpackungsmaterial 10 mit dem vorstehend beschriebenen Schichtaufbau wurde zunächst aus dem oPA-Film 22 und der Aluminiumfolie 12 mittels der Klebstoffschicht 24 ein Vorlaminat hergestellt. Anschliessend wurden die Haftvermittlerschicht 14, die Absorberschicht 16 mit den Kaliumacetat-Partikeln und die Siegelschicht 18 als Coextrusionsschicht 20 durch Extrusionsbeschichten auf die Aluminiumseite des Vorlaminats appliziert.

Aus dem auf diese Weise hergestellten Verpackungsmaterial wurden Beutel hergestellt. Eine Feuchtigkeitsmessung im Innern der Beutel zeigte eine Regulierung des Feuchtegehalts auf eine relative Feuchte von ca. 23 % RH (je nach Messmethode im Bereich von 20 - 25% RH). Infolge der Haftvermittlerschicht aus EAA zeigte die Aluminiumfolie keine Anzeichen von Korrosion und ein Geruch nach Essigsäure wurde durch die Siegelschicht verhindert.

## Patentansprüche

1. Verpackungsmaterial zur Herstellung von Verpackungen für feuchteempfindliche Produkte, mit welchem Verpackungsmaterial (10) in einem Kopfraum einer Verpackung über den Produkten bei einer Temperatur von -20°C bis 50 °C, insbesondere 5 bis 50 °C, eine relative Feuchte (RH) von 5 bis 80 %, insbesondere 5 bis 35 %, einstellbar ist, wobei das Verpackungsmaterial (10) eine Aluminiumfolie (12) als Wasserdampfbarriere aufweist, die auf einer ersten Seite eine feuchteregulierende Absorberschicht (16) aufweist und auf der zweiten Seite unbeschichtet, beschichtet, lackiert oder kaschiert ist, wobei die feuchteregulierende Absorberschicht 0,15 bis 95 Gew.-%, insbesondere 0,15 bis 25 Gew.-%, eines hygroskopischen Salzes und/oder 0,15 bis 95 Gew.-%, insbesondere 0,15 bis 25 Gew.-%, Silicagel und/oder 0,15 bis 95 Gew.-%, insbesondere 0,15 bis 25 Gew.-%, Zeolithe enthält.

2. Verpackungsmaterial nach Anspruch 1, **dadurch gekennzeichnet, dass** zwischen der Aluminiumfolie (12) und der feuchteregulierenden Absorberschicht (16) eine Haftvermittlerschicht (14) angeordnet ist.

3. Verpackungsmaterial nach Anspruch 1, **dadurch gekennzeichnet, dass** auf der Absorberschicht (16) eine Siegelschicht (18) angeordnet ist.

4. Verpackungsmaterial nach Anspruch 1, **dadurch gekennzeichnet, dass** die Absorberschicht (16) als hygroskopisches Salz Kaliumacetat, vorzugsweise in einer Konzentration von 1 bis 10 Gew.-%, insbesondere 1 bis 5 Gew.-%, enthält.

5. Verpackungsmaterial nach Anspruch 1, **dadurch gekennzeichnet, dass** die Absorberschicht (16) aus einem Blend aus Polyethylen (PE), insbesondere aus einem Polyethylen niedriger Dichte (LDPE) oder hoher Dichte (HDPE), Polypropylen (PP), Ethylen-Acrylsäure-Copolymer (EAA), Ethylen-Methacrylat-Copolymer (EMA), Polyethylenterephthalat (PET) oder Polyvinylchlorid (PVC) mit dem Zusatz aus hygroskopischem Salz und/oder Silicagel und/oder Zeolithen besteht.

6. Verpackungsmaterial nach Anspruch 2, **dadurch gekennzeichnet, dass** die Haftvermittlerschicht (14) aus einem Ethylen-Acrylsäure-Copolymer (EAA), einem Ethylen-Methacrylat-Copolymer (EMA), einem mit Maleinsäureanhydrid gepfropften Polypropylen (MAH-PP), einem Polyurethan (PU)-Kleber oder einer mit lösemittelhaltigen oder lösemittelfreien Klebstoffen hergestellten Klebstoffschicht besteht.

7. Verpackungsmaterial nach Anspruch 3, **dadurch gekennzeichnet, dass** die Siegelschicht (18) aus Polyethylen (PE), insbesondere aus einer Mischung aus einem Polyethylen niedriger Dichte (LDPE) und aus einem Polyethylen hoher Dichte (HDPE) oder anderen Polyolefinen oder modifizierten Polyolefinen, besteht.

8. Verpackungsmaterial nach den Ansprüchen 2 und 3, **dadurch gekennzeichnet, dass** die Haftvermittlerschicht (14), die Absorberschicht (16) mit dem Zusatz aus hygroskopischem Salz, Silicagel oder Zeolithen und die Siegelschicht (18) eine Coextrusionsschicht (20) eine Lackschicht oder einen Kaschierfilm bilden.

9. Verpackungsmaterial nach einem der Ansprüche 1 bis 8, **dadurch gekennzeichnet, dass** die Aluminiumfolie (12) auf der zweiten Seite über eine Klebstoffschicht (24) mit einem Kunststofffilm (22), vorzugsweise aus orientiertem Polyamid (oPA), verbunden ist.
